# EUROPÄISCHE PATENTSCHRIFT

(11) **EP 1 838 829 B1**
(45) Veröffentlichungstag und Bekanntmachung des Hinweises auf die Patenterteilung: **04.03.2015**
(21) Anmeldenummer: 06706220.8
(22) Anmeldetag: 13.01.2006
(51) Int. Cl.: C11D 3/22, C11D 3/37, D06M 16/00, D06M 15/564, C08F 283/06, C08G 18/66, C08G 18/10, C08G 18/48, C08L 51/08

(54) **ANTIADHESIVE POLYMER ZUR VERHINDERUNG DER ADHESION VON MIKROORGANISMEN AN TEXTILIEN UND ZUR VERHINDERUNG VON WESCHEGERUCH**
ANTIADHESIVE POLYMER FOR PREVENTION OF ADHESION OF MICROORGANISMS TO TEXTILES AND FOR PREVENTION OF LAUNDRY ODOURS
POLYMERES ANTI-ADHESIFS PERMETTANT D'EMPECHER L'ADHESION DE MICRO-ORGANISMES SUR DES TEXTILES ET AINSI L'ODEUR DU LINGE

(30) Priorität: 21.01.2005 DE 102005003122
(43) Veröffentlichungstag der Anmeldung: 03.10.2007
(73) Patentinhaber: Henkel AG & Co. KGaA, 40589 Düsseldorf (DE)
(72) Erfinder: BOCKMÜHL, Dirk, 42113 Wuppertal (DE); HÖHNE, Heide-Marie, 40591 Dèsseldorf (DE); WRUBBEL, Noelle, 40215 Düsseldorf (DE); HEIDEMEIER, Dorothee, 40627 Düsseldorf (DE); DAHLMANN, Doris, 40589 Düsseldorf (DE); PLANTENBERG, Thomas, 40822 Mettmann (DE); JONKE, Hermann, 40231 Düsseldorf (DE); BAYERSDÖRFER, Rolf, 22589 Hamburg (DE); SCHÄFER, Andre, 40789 Monheim (DE); BREVES, Roland, 40822 Mettmann (DE)
(86) Internationale Anmeldenummer: PCT/EP2006/000255
(87) Internationale Veröffentlichungsnummer: WO 2006/077049

(56) Entgegenhaltungen:
- EP-A- 0 397 246
- EP-A- 1 449 912
- WO-A-02/15853
- WO-A-02/31096
- WO-A-99/59808
- WO-A-02/064668
- WO-A-03/035712
- WO-A-03/095559
- WO-A-2005/056741
- DE-A1- 3 536 530
- DE-A1- 19 842 636
- DE-A1- 19 844 892
- DE-B- 1 169 670
- GB-A- 2 304 286
- US-A- 6 146 651
- DATABASE WPI Section Ch, Week 199416 Derwent Publications Ltd., London, GB; Class A18, AN 1994-132461 XP002381183 & JP 06 081213 A (KURARAY CO LTD) 22. März 1994 (1994-03-22)

## Beschreibung

Die vorliegende Erfindung betrifft die Verwendung von gegenüber Mikroorganismen antiadhäsiv wirksamen Polymeren zur Verhinderung der Anhaftung von Mikroorganismen an Textilien sowie zur Verhinderung von Wäschegeruch sowie Kapseln, Waschmittel und Textilbehandlungsmittel, die diese antiadhäsiven Polymere enthalten.

Beim Tragen von Kleidungsstücken, aber auch nach der Wäsche treten häufig unangenehme Gerüche an Textilien auf. Diese werden verursacht durch Hautbakterien, die bei der Verwendung von Flüssigwaschmitteln nur unzureichend entfernt werden. Der Abbau von Hautfetten oder anderen Rückständen auf der Wäsche durch diese Bakterien führt zu übelriechenden Verbindungen, was in der Regel als unangenehm empfunden wird.

Auch andere Mikroorganismen werden beim Waschen der Wäsche, insbesondere bei niedrigen Temperaturen, häufig nur unzureichend entfernt. Es kann sich hierbei auch um Krankheitserreger wie Candida oder Dermatophyten handeln.

Es wurde nun überraschenderweise gefunden, dass durch bestimmte Polymere eine Verminderung der Adhäsion von Mikroorganismen an die Wäsche bzw. eine bessere Ablösung von bereits an die Wäsche adhärierten Mikroorganismen erreicht werden kann.

Durch die erfindungsgemäße Verwendung der genannten Polymere können somit unangenehme Gerüche, insbesondere solche, die nach der Wäsche auftreten, vermindert und vorzugsweise vollständig verhindert werden. Hierbei wird im Gegensatz zu im Stand der Technik beschriebenen geruchsabsorbierenden Zusätzen, wie z.B. Cyclodextrinen, die Ursache der üblen Gerüche bekämpft, anstatt die übel riechenden Substanzen lediglich einzukapseln.

Durch den Einsatz antiadhäsiver Substanzen kann des Weiteren auch auf den Einsatz antibakteriell wirksamer Substanzen verzichtet werden, so dass eine schonende Wäschebehandlung erfolgen kann und das Problem der Resistenzbildung vermieden wird.

Die eingesetzten Polymere haben des Weiteren vorzugsweise zusätzliche erwünschte Eigenschaften, beispielsweise können sie eine Hydrophilierung des Gewebes herbeiführen.

Die Druckschrift DE 35 36 530 A1 betrifft den Einsatz von Pfropfcopolymeren, erhältlich durch Pfropfen von (a) Polyalkylenoxid mit einem Molekulargewicht von 2000 bis 100.000 auf Basis von Ethylenoxid, Propylenoxid und/oder Butylenoxid mit (b) Vinylacetat im Gewichtsverhältnis (a) zu (b) von 1:0,2 bis 1 : 10 in Waschmitteln. Besagte Pfropfcopolymere fungieren gemäß als Vergrauungsinhibitor.

Ein erster Gegenstand der vorliegenden Erfindung ist daher die Verwendung von gegenüber Mikroorganismen anti-adhäsiv wirksamen Polymeren zur Verminderung der Adhäsion von Mikroorganismen an Textilien bzw. Wäsche, wobei die anti-adhäsiv wirksamen Polymere ausgewählt sind aus der Gruppe der Pfropfcopolymere, wobei die anti-adhäsiv wirksamen Polymere ein Strukturelement ausgewählt aus der Gruppe der wasserlöslichen Polyethylenglykole mit einem Molekulargewicht von 5000 - 7000 g/mol enthalten und wobei das Strukturelement die Pfropfgrundlage des Pfropfcopolymers darstellt und die Pfropfäste aus Polyvinylacetat bestehen, wobei der Anteil der Pfropfgrundlage 55-95 Gew.-% und der Anteil der Pfropfäste entsprechend 5-45 Gew.-% beträgt. Als Beispiele seien Textilien aus Wolle, Baumwolle, Seide, Angora, Kunstseide, Polyester, Polyamid, Polyacryl sowie Mischgewebe aus diesen Materialien genannt.

Unter Mikroorganismen, deren Adhäsion verhindert werden kann, sind erfindungsgemäß insbesondere Bakterien, Pilze sowie Viren und Algen zu verstehen. Dies schließt bakterielle Endo- oder Exosporen sowie Sporen, die als Fortpflanzungsstrukturen bei Pilzen dienen, mit ein. In einer bevorzugten Ausführungsform sind unter Mikroorganismen Bakterien und Pilze zu verstehen.

Unter Bakterien sind erfindungsgemäß insbesondere zu verstehen gramnegative und grampositive Bakterien, vor allem pathogene Bakterien ausgewählt aus Propionibacterium acnes, Staphylococcus aureus, Streptokokken Gruppe A (betahämolysierende S.), S. pyogenes, Corynebacterium spp. (insbesondere C. tenuis, C. diphtheriae, C. minutissimum), Micrococcus spp. (insbesondere M. sedentarius), Bacillus anthracis, Neisseria meningitidis, N. gonorrhoeae, Pseudomonas aeruginosa, P. pseudomallei, Borrelia burgdorferi, Treponema pallidum, Mycobacterium tuberculosis, Mycobacterium spp., Escherichia coli sowie Streptococcus spec. (insbesondere S. gordonii, S. mutans), Actinomyces spec. (insbesondere A. naeslundii), Salmonella spec., Actinobacteria (insbesondere Brachybacterium spec.), alpha-Proteobacteria (insbesondere Agrobacterium spec.), beta-Proteobacteria (insbesondere Nitrosomonas spec.), Aquabacterium spec., Hydrogenophaga, gamma-Proteobacteria, Stenotrophomonas spec., Xanthomonas spec. (campestris), Neisseria spec., Haemophilus spec. sowie alle Mikroorganismen, die von Paster et al. (J. Bac. 183 (2001) 12, 3770-3783) beschrieben werden.

In einer erfindungsgemäß besonders bevorzugten Ausführungsform sind die Bakterien ausgewählt aus geruchsbildende Bakterien, vor allem aus geruchsbildenden Staphylokokken, insbesondere aus *S. hominis, S. epidermidis* oder *S. aureus* und/oder aus gram-positiven anaerobe Kokken, insbesondere aus Peptostreptokokken, vor allem *Anaerococcus octavius*, und/oder aus geruchsbildenden Corynebakterien, vor allem *Corynebacterium amycolatum*, und/oder aus geruchsbildenden Mikrokokken, vor allem aus Vertretern der Gattungen Micrococcus und Kocuria und/oder aus geruchsbildenden Bakterien der Gattungen Pseudomonas, Xanthomonas oder Stenotrophomonas, und/oder aus geruchsbildenden Bakterien der Gattung Bacillus.

Gegenstand der vorliegenden Erfindung ist daher des weiteren die Verwendung von gegenüber Mikroorganismen anti-adhäsiv wirksamen Polymeren zur Verminderung von Wäschegeruch.

Besonders bevorzugte Pilze sind erfindungsgemäß Hefen, Schimmelpilze, Dermatophyten und keratinophile Pilze. Hefen im erfindungsgemäßen Zusammenhang sind einzellige Pilze, die sich überwiegend durch Sprossung vermehren. Hefepilze stellen keine eigenständige taxonomische Kategorie im System der Pilze dar. Systematisch werden die meisten Hefen den Endomycetes zugeordnet. Daneben treten aber auch bei verschiedenen anderen Pilzen im Entwicklungszyklus oder unter bestimmten Umweltbedingungen Sprosszellstadien auf, die als Hefestadien bezeichnet werden. Solche einzellig, hefeartig sprossende Wuchsformen treten bei den Ascomyceten, aber auch bei den Zygomyceten, Basidomyceten und Deuteromyceten auf. Erfindungsgemäß sind auch alle diese Wuchsformen unter Hefen zu verstehen.

Bei den Pilzen handelt es sich erfindungsgemäß vorzugsweise um humanpathogene Pilze, insbesondere um die humanpathogenen Spezies der Klassen Ascomycota, Basidiomycota, Deuteromycota und Zygomycota, vor allem kann es sich um humanpathogene Formen von Candida handeln.

Besonders bevorzugt wird hierbei die Anhaftung der medizinisch relevanten Formen von Candida vermindert, beispielsweise von *C. albicans, C. boidinii, C. catenulata, C. ciferii, C. dubliniensis, C. glabrata, C. guilliermondii, C. haemulonii, C. kefyr, C. krusei, C. lipolytica, C. lusitaniae, C. norvegensis, C. parapsilosis, C. pulcherrima, C. rugosa, C. tropicalis, C. utilis, C. viswanathii.* Insbesondere bevorzugt sind *C. albicans, C. stellatoidea, C. tropicalis, C. glabrata* und *C. parapsilosis.*

Nach einer weiteren bevorzugten Ausführungsform wird die Anhaftung von Pilzen der Spezies *Rhodotorula spp., Cryptococcus spp., Exophilia spp. , Hormoconis spp.* vermindert.

Unter Schimmelpilzen sind gemäß der vorliegenden Erfindung solche Pilze zu verstehen, die ihren Lebensraum im Boden, auf Lebens- und/oder Futtermitteln oder in konzentrierten Nährlösungen haben, ein typisches Mycel bilden und ihre Nährstoffe aus organischen Substanzen gewinnen, die sie dadurch zersetzen (saprobiontische bzw. saprophytische Lebensweise). Des Weiteren vermehren sie sich überwiegend ungeschlechtlich durch Sporen (insbesondere Sporangiosporen oder Konidien) und bilden, wenn überhaupt, nur sehr kleine sexuelle Fortpflanzungsorgane aus.

Auch bezüglich der Schimmelpilze sind als Beispiele Spezies aus den Klassen Ascomycota, Basidiomycota, Deuteromycota und Zygomycota zu nennen, insbesondere alle Spezies der Gattungen Aspergillus, Penicillium, Cladosporium und Mucor sowie *Stachybotrys, Phoma, Alternaria, Aureobasidium, Ulocladium, Epicoccum, Stemphyllium, Paecilomyces, Trichoderma, Scopulariopsis, Wallemia, Botrytis, Verticillium und Chaetonium.*

Zu den Ascomycota gehören hier insbesondere alle Spezies der Gattungen Aspergillus, Penicillium und Cladosporium. Diese Pilze bilden Sporen aus, die bei Kontakt mit der Haut oder den Atemwegen ein stark allergieauslösendes Potential aufweisen. Zu den Basidomycota ist beispielsweise *Cryptococcus neoformans* zu zählen. Zu den Deuteromycota sind alle als Schimmelpilze bekannten Gattungen zu zählen, insbesondere solche, die durch das Fehlen eines sexuellen Stadiums nicht den Klassen Ascomycota, Basidiomycota oder Zygpmycota zugeordnet werden.

Unter keratinophilen Pilzen sind solche Haut- und/oder Haarpilze zu verstehen, die in verhornter Haut und deren Anhangsgebilden (insbesondere Haaren und/oder Nägeln) wachsen. Insbesondere sind darunter Dermatophyten und alle Spezies der Gattung Malassezia zu verstehen. Unter Dermatophyten sind erfindungsgemäß insbesondere alle Spezies der Gattungen Trichophyton, Microsporum und Epidermophyton zu verstehen.

Der keratinophile Pilz Malassezia, ein Hefepilz, gilt als Erreger von vermehrter Schuppenbildung der Haut, beispielsweise auf dem Kopf (Haarschuppen). Außerdem wird dieser Organismus als Auslöser der Hautkrankheit Pityriasis versicolor betrachtet. Insbesondere ist es daher von Vorteil, die Adhäsion von Malassezia, insbesondere die der Spezies *M. furfur (auch bekannt unter dem Namen Pityrosporum ovale), M. pachydermatis, M. sympodialis* und/oder *M. globosa* zu vermindern bzw. im Wesentlichen zu verhindern.

Gemäß einer bevorzugten Ausführungsform sind die keratinophilen Pilze ausgewählt aus *Trichophyton mentagrophytes, T. rubrum, T. asteroides, T. concentrium, T. equinum, T. meginii, T. gallinae, T. tonsurans, T. schoenleinii, T. terrestre, T. verrucosum, T. violaceum, Microsporum canis, Microsporum audounii, M. gypseum, Epidermophyton flossocum, Malassezia furfur, M. sympodialis, M. globosa* und *M. pachydermatis.*

Unter Dermatophyten sind erfindungsgemäß insbesondere zu verstehen *Trichophyton mentagrophytes, T. rubrum, T. asteroides, T. concentrium, T. equinum, T. meginii, T. gallinae, T. tonsurans, T. schoenleinii, T. terrestre, T. verrucosum, T. violaceum, Microsporum canis, Microsporum audounii, M, gypseum* und *Epidermophyion flossocum.*

Die Verminderung der Adhäsion beträgt hierbei in einer bevorzugten Ausführungsform in Bezug auf sämtliche sich auf einer Textilie befindlichen Mikroorganismen vorzugsweise mindestens 30 %, besonders bevorzugt mindestens 40 oder 50 %, insbesondere mindestens 60 oder 70 %, vor allem mindestens 80 oder 90 %, im Vergleich zu einer Behandlung mit einer Zubereitung, die dieselben Bestandteile außer dem mindestens einen gegenüber Mikroorganismen anti-adhäsiv wirksamen Polymer enthält.

Die Verminderung der Adhäsion beträgt in einer weiteren bevorzugten Ausführungsform in Bezug auf mindestens einen Mikroorganismus, insbesondere in Bezug auf mindestens ein für Wäschegeruch relevantes Bakterium, vorzugsweise mindestens 30 %, besonders bevorzugt mindestens 40 oder 50 %, insbesondere mindestens 60 oder 70 %, vor allem mindestens 80 oder 90 %, im Vergleich zu einer Behandlung mit einer Zubereitung, die dieselben Bestandteile außer dem mindestens einen gegenüber Mikroorganismen anti-adhäsiv wirksamen Polymer enthält.

Bei den gegenüber Mikroorganismen anti-adhäsiv wirksamen Polymeren handelt es sich um spezielle Pfropfcopolymere, wobei die anti-adhäsiv wirksamen Polymere ausgewählt sind aus der Gruppe der Pfropfcopolymere, wobei die anti-adhäsiv wirksamen Polymere ein Strukturelement ausgewählt aus der Gruppe der wasserlöslichen Polyethylenglykole mit einem Molekulargewicht von 5000 - 7000 g/mol enthalten und wobei das Strukturelement die Pfropfgrundlage des Pfropfcopolymers darstellt und die Pfropfäste aus Polyvinylacetat bestehen, wobei der Anteil der Pfropfgrundlage 55-95 Gew.-% und der Anteil der Pfropfäste entsprechend 5-45 Gew.-% beträgt.

Die anti-adhäsiv wirksamen Polymere sind vorzugsweise mindestens zu 0,5 g, besonders bevorzugt zu mindestens 1 g, vor allem zu mindestens 5 g in 100 g Wasser bei 20°C löslich und bleiben über mindestens 6 Monate bei 20°C gelöst.

Bei den Polymeren handelt es sich um gepfropfte Polymere , die die zuvor genannten polymeren Strukturelemente enthalten.

### Pfropfcopolymere

Bei den Pfropfcopolymeren sind die zuvor genannten Polyethylenglykole in der Pfropfgrundlage enthalten, so dass diese in einer bevorzugten Ausführungsform im Wesentlichen oder ausschließlich aus diesen besteht. Als Pfropfgrundlage kommen somit also Polymere mit einer Kettenstruktur aus dem Bereich der mit den zuvor genannten Molekulargewichten in Frage.

Zur Herstellung der Pfropfäste werden Ester des Vinylalkohols, mit linearen, gesättigten Monocarbonsäuren mit 2 C-Atomen, eingesetzt.

Im einer besonders bevorzugten Ausführungsform der vorliegenden Erfindung, die sich als besonders wirksam herausstellte, handelt es sich bei der Pfropfgrundlage um Polyethylenglykol mit einem Molekulargewicht von 5000 - 7000 g/mol, insbesondere etwa 6000 g/mol, und die Pfropfäste bestehen aus Polyvinylacetat, wobei der Anteil der Pfropfgrundlage etwa 55-95 Gew.-%, insbesondere 60/65 70, 80 oder 90 Gew.-%, und der Anteil der Pfropfäste entsprechend etwa 5-45 Gew.-%, insbesondere 10, 20, 30, 35 oder 40 Gew.-%, beträgt.

Gegenstand der vorliegenden Erfindung ist daher auch ein Verfahren zur Herstellung eines gepfropften Copolymers, dadurch gekennzeichnet, dass ein Polyethylenglykol mit einem Molekulargewicht von 5000 - 7000 g/mol, insbesondere etwa 6000 g/mol, gepfropft wird mit Vinylacetat, wobei das Gew.-%-Verhältnis zwischen Polyethylenglykol und ungesättigtem Ester zwischen 55:45 und 95:5, vor allem 60:40, 65:35, 70:30, 80:20 oder 90:10, beträgt. Gegenstand der vorliegenden Erfindung sind ferner Copolymere, die nach einem solchen Verfahren erhältlich sind.

Die Angaben zum Gew.-%-Verhältnis beziehen sich jeweils primär auf das Verhältnis der eingesetzten Edukte. Für den Fall, dass vollständige Pfropfung erfolgt, stimmen die Gew.-%-Verhättnisse der Edukte mit dem durchschnittlichen Gew.-%-Verhältnis des erhaltenen Pfropfcopolymers überein. Aufgrund von Nebenreaktionen kann das durchschnittliche Gew.-%-Verhältnis der eingesetzten Edukte vom Gew.-%-Verhältnis des erhaltenen Pfropfcopolymers abweichen.

Die Pfropfcopolymere besitzen in einer bevorzugten Ausführungsform ein Molgewicht von 5000 bis 300000, besonders bevorzugt von 20000 bis 250000, vor allem von 50000 bis 200000 g/mol.

### Kapseln

Erfindungsgemäß wurde überraschenderweise ferner festgestellt, dass die erfindungsgemäßen gegenüber Mikroorganismen anti-adhäsiven Polymere sehr gut in Kapseln eingebettet werden können, welche wiederum zu Wasch- und Reinigungsmitteln hinzugegeben werden können und einen vorteilhaften visuellen Effekt bewirken.

Weiterer Gegenstand der vorliegenden Erfindung sind daher auch Kapseln enthaltend erfindungsgemäße gegenüber Mikroorganismen anti-adhäsiv wirksame Polymere. Die anti-adhäsiv wirksamen Polymere sind vorzugsweise in einer Menge von 1-30, besonders bevorzugt 5-25, insbesondere 10-20 Gew.-% in den Kapseln enthalten.

Es werden zwei verschieden Typen von Kapseln unterschieden, zum einen Kapseln mit Kern-Hülle-Struktur, bei denen der Inhaltsstoff von einer Wand oder Barriere umgeben ist, zum anderen Kapseln, bei denen der Inhaltsstoff in einer Matrix aus einem matrix-bildenden Material verteilt ist. Letztere Art von Kapseln wird auch als "Speckles" bezeichnet. Erfindungsgemäß können die erfindungsgemäßen anti-adhäsiv wirksamen Polymere in jeder Art von Kapsel enthalten sein.

Als Beispiele seien Mikrokapseln mit Polyvinylalkohol-Beschichtung genannt, wie sie in der EP 0266796 A1 beschrieben werden, Kapseln mit wasserlöslicher Umhüllung aus Celluloseether, Polyacrylat, Polyvinylalkohol oder Polyethylenoxid, wie in der GB 1390503 A offenbart, Kapseln aus gehärtetem Carrageenan oder modifiziertem Pektin, wie in der GB 1461775 A beschrieben, Kapseln aus einem gelierten Polymermaterial, wie in der WO 97/14780 beschrieben. Zur Offenbarung weiterer erfindungsgemäß verwendbarer Kapseln wird auf die WO 97/24178 verwiesen.

In einer bevorzugten Ausführungsform handelt es sich bei den Kapseln, die die anti-adhäsiv wirksamen Polymere enthalten um die zuvor genannten "Speckles", also um Kapseln aus einer Matrix aus einem matrix-bildendem Material, wobei es sich bei dem matrix-bildendem Material vorzugsweise um Polymere handelt, so dass diese Art von Kapseln im folgenden auch "polymere Matrixstrukturen" genannt werden.

Bei den polymeren Matrixstrukturen handelt es sich hierbei besonders bevorzugt um solche, wie sie in den Patentanmeldungen DE2215441 und EP1149149 beschrieben werden. Hinsichtlich der Form, Gestaltung, der Eigenschaften, der Struktur und der Herstellung der Kapseln wird explizit auf diese Patentanmeldungen verwiesen, deren Offenbarungsgehalt hiermit zum Gegenstand der vorliegenden Anmeldung gemacht wird. Einige wichtige und gegebenenfalls auch leicht abweichende Eigenschaften der Kapseln werden im folgenden dargelegt.

Die Kapseln bestehen im Wesentlichen aus einem wasserlöslichen, polymeren Wandmaterial, das zu einer kontinuierlichen Matrix gelierbar ist. Es handelt sich demnach um Kapseln, die an ihrer Oberfläche aus einem gelförmigen, wasserlöslichen Polymeren bestehen, wobei das wasserlösliche Polymere sowie die Art und Konzentration des Elektrolyten so gewählt werden, dass das Polymere in einem Waschmittel beständig ist und bei Verdünnung des Waschmittels mit Wasser löslich wird.

Geeignete wasserlösliche Polymere, die geeignet zur Herstellung erfindungsgemäß bevorzugter Kapseln sind, sind unlöslich in 20%igem (w/v) wäßrigem Natriumsulfat, 30%igem (w/v) wäßrigem Natriumcitrat oder in 30%igem (w/v) wäßrigem Natriumtartrat. Sie können beispielsweise durch folgenden Auswahltest ausgewählt werden:

0,5 ml einer verdünnten Lösung des auf seine Eignung zu testenden Polymers werden nach und nach zu 10 ml einer Lösung gegeben, die Natriumsulfat im Konzentrationsbereich von 0,5 bis 20 % (w/v) enthält. Geeignete Polymere sind diejenigen, die rasch einen zusammenhängenden, gelatinösen Niederschlag in Gegenwart von 20 % (w/v) oder weniger, vorzugsweise bereits bei 10 % (w/v) oder weniger, Natriumsulfat bei 0, 25 und 50°C bilden. Hinsichtlich weiterer geeigneter Auswahltests wird auf die DE2215441 verwiesen.

Geeignete Polymere sind beispielsweise ausgewählt aus natürlich vorkommenden Polysacchariden, insbesondere Pektin, Carrageenan, Alginsäure und Amylopektin, aus Celluloseether, einschließlich Methyl-, Hydroxyethyl-, Hydroxypropyl- und Carboxymethylcellulosen, aus vollsynthetischen Polymeren, insbesondere Polyvinylalkohol, unterschiedlich stark hydroxyliertem Polyvinylacetat, Polyacrylsäure und Polyethoxyether, sowie aus Proteinen, insbesondere Gelatine. Besonders bevorzugt sind die Polymere ausgewählt aus Carrageenan, Alginat und Gellan Gum. Ganz besonders bevorzugt ist hierbei Alginat.

Alginat ist ein natürlich vorkommendes Salz der Alginsäure und kommt in allen Braunalgen (Phaeophycea) als Zellwandbestandteil vor. Alginate sind saure, Carboxygruppen enthaltende Polysaccharide mit einem relativen Molekulargewicht M_{R} von ca. 200.000, bestehend aus D-Mannuronsäure und L-Guluronsäure in unterschiedlichen Verhältnissen, welche mit 1,4-glykosidischen Bindungen verknüpft sind. Die Natrium-, Kalium-, Ammonium- und Magnesiumalginate sind wasserlöslich. Die Viskosität von Alginat-Lösungen hängt u.a. von der Molmasse und vom Gegenion ab. Calciumalginate bilden z.B. bei bestimmten Mengenverhältnissen thermoirreversible Gele. Natriumalginate ergeben sehr viskose Lösungen mit Wasser und können durch Wechselwirkung mit di- oder trivalenten Metallionen wie Ca²⁺ vernetzt werden. Inhaltsstoffe, die auch in der wässrigen Natriumalginatlösung enthalten sind, werden so in einer Alginatmatrix eingeschlossen. ,

Carrageenan ist ein Extrakt aus den zu den Florideen zählenden Rotalgen (*Chondrus crispus* u. *Gigartina stellata*). In Gegenwart von K⁺-Ionen oder Ca²⁺-Ionen vernetzt Carrageenan.

Gellan Gum ist ein unverzweigtes anionionisches mikrobielles Heteroexopolysaccharid mit einer tetrasaccharidischen Grundeinheit, bestehend aus den Monomeren Glucose, Glucuronsäure und Rhamnose, wobei etwa jede Grundeinheit mit einem L-Glycerat und jede zweite Grundeinheit mit einem Acetat verestert ist. Gellan Gum vernetzt in Gegenwart von K⁺-Ionen, Na⁺-Ionen, Ca²⁺-Ionen oder Mg²⁺-Ionen.

Die Herstellung der polymeren Matrixstrukturen, die erfindungsgemäße gegenüber Mikroorganismen anti-adhäsive Polymere enthalten, kann einfach durch Eintropfen von Lösungen dieser Polymere in Kationen-haltige Lösungen erfolgen. Bei den Kationen handelt es sich hierbei in Abhängigkeit vom Polymer der Matrixstruktur vorzugsweise um Alkali- und/oder Ammonium- und/oder um Erdalkaliionen, wobei das Anion jeweils frei wählbar ist. Es können hierbei grundsätzlich Alkali-, Ammonium- und Erdalkalisalze jeder beliebigen anorganischen und/oder organischen Säure eingesetzt werden.

Zur Herstellung Alginat-basierter Kapseln wird vorzugsweise eine wässrige Alginat-Lösung, welche auch die einzuschließenden anti-adhäsiv wirksamen Polymere sowie gegebenenfalls weitere Komponenten wie Füllstoff(e), Mikrohohlkugeln, Konservierungsmittel und färbende Mittel enthält, vertropft und anschließend in einem Ca²⁺-Ionen enthaltendem Fällbad ausgehärtet.

Die Herstellung der Kapseln kann beispielsweise mittels einer Vetropfungsanlange der Firma Rieter Automatik GmbH erfolgen. Dabei erfolgt die Vertropfung der wässrigen Polymerlösung, die die einzuschließenden anti-adhäsiv wirksamen Polymere sowie gegebenenfalls Füllstoff(e), Mikrohohlkugeln, Konservierungsmittel und färbende Mittel enthält, durch Aufprägen einer Schwingung, die mit Hilfe einer oszillierenden Membran erzeugt wird. Der Tropfenabriss erfolgt durch die erhöhte Scherwirkung beim Zurückschwingen der Membran. Die Vertropfung selbst kann beispielsweise durch eine Einzeldüse oder durch eine Düsenplatte mit 10 bis 500, vorzugsweise 50 bis 100 Öffnungen erfolgen. Die Düsen weisen vorzugsweise Öffnungen mit einem Durchmesser im Bereich von 0,2 bis 2, vorzugsweise 0,3 bis 0,8 mm auf. Grundsätzlich kann die Vertropfung in ein Fällbad erfolgen, welches als Rührbehälter oder Kessel ausgelegt ist. Hierbei besteht jedoch die Gefahr, dass sich Kapseln treffen und miteinander verkleben. Weiterhin können während des Rührens Kapseln und der eingeschlossene aktive Inhaltsstoff wieder zerstört werden, da der Rührvorgang durch Eintrag von Energie auch zu einem unerwünschten Temperaturanstieg führt. Diese Nachteile können vermieden werden, wenn das Fällbad wie eine Art Strömungskanal ausgebildet ist. Die Vertropfung erfolgt in eine gleichförmige Strömung, die die Tropfen so schnell aus der Eintropfzone wegfördert, dass sie nicht von nachfolgenden Tropfen getroffen werden und verkleben können. Solange die Kapseln noch nicht völlig ausgehärtet sind, schwimmen sie auf; mit fortschreitender Aushärtung sedimentieren sie.

Als alternative Herstellungsverfahren können auch andere Vertropfungsanlagen verwendet werden, welche sich durch unterschiedliche Tropfenbildungstechnologien unterscheiden. Beispielhaft seien hier Anlagen der Firma Gouda, der Firma Cavis oder der Firma GeniaLab genannt. Hinsichtlich weiterer Herstellungsverfahren wird auf die DE2215441 verwiesen.

Die Menge an Alginat in der wässrigen Alginat-Lösung beträgt vorzugsweise zwischen 0,01 und 10 Gew.-%, besonders bevorzugt zwischen 0,1 und 5 Gew.-% und insbesondere bevorzugt zwischen 1 und 3 Gew.-%. Vorzugsweise wird Natriumalginat eingesetzt.

Es kann vorteilhaft sein, dass die Alginat-basierten Kapseln anschließend mit Wasser gewaschen und dann in einer wässrigen Lösung mit einem Komplexbildner, wie beispielsweise Dequest, gewaschen werden, um freie Ca²⁺-Ionen, welche unerwünschte Wechselwirkungen mit Inhaltsstoffen des flüssigen Wasch- und Reinigungsmittels, z.B. den Fettsäureseifen, eingehen können, auszuwaschen. Anschließend werden die Alginat-basierten, Kapseln noch mal mit Wasser gewaschen, um überschüssigen Komplexbildner zu entfernen.

Die Kapseln können vor der Verwendung in einem Wasch- und Reinigungsmittel getrocknet werden, bevorzugt werden sie aber feucht eingesetzt.

Die Kapseln können jeden beliebigen Durchmesser haben, insbesondere einen Durchmesser zwischen 1 µm und 1 cm, die Größe der Kapseln liegt jedoch vorzugsweise im sichtbaren Bereich und beträgt vorzugsweise zwischen 0,5 und 4,0 mm, gemessen an der längsten Ausdehnung. Die Kapseln können hierbei jede beliebige Gestalt aufweisen, besitzen jedoch vorzugsweise eine runde oder annähernd runde Gestalt.

Die Kapseln können weiterhin auch Füllstoffe, wie vorzugsweise Kieselsäuren oder Aluminiumsilikate, insbesondere Zeolithe, enthalten. Zum Einbau dieser Füllstoffe werden die entsprechenden Materialien mit in die Alginat-Lösung gegeben. Kieselsäuren, die sich als Füllstoffe eignen sind im Handel erhältlich unter den Namen Aerosil® oder Sipernat® (beide ex Degussa). Weitere geeignete Füllstoffe sind Aluminiumsilikate und insbesondere Zeolithe. Eingesetzt werden können Zeolith A, Zeolith P, Zeolith X oder Mischungen daraus. Geeignete Zeolithe umfassen beispielsweise Handelsprodukte wie Wessalith® (ex Degussa), Zeolith MAP® (ex Crosfield) oder VEGOBOND AX® (ex SASOL).

Die Menge an Füllstoff in der wässrigen Alginat-Lösung beträgt vorzugsweise zwischen 0 und 20 Gew.-%, mehr bevorzugt zwischen 1 und 10 Gew.-% und insbesondere bevorzugt zwischen 2 und 10 Gew.-%.

Die Füllstoffe verleihen den Kapseln einerseits eine robuste Struktur und wirken sich so positiv auf die Stabilität der Kapseln aus. Zusätzlich können die Füllstoffe, insbesondere die Kieselsäuren, beim eigentlichen Waschprozess die Löslichkeit der Kapseln verbessern.

In einer bevorzugten Ausführungsform enthält die Kapsel zusätzlich wenigstens eine Mikrohohlkugel. Mikrohohlkugeln weisen einen Durchmesser von 2 bis zu 500 µm, insbesondere von 5 bis 20 µm, und ein spezifisches Gewicht von weniger als 1 g·cm⁻³ auf. Durch Einarbeitung von einer oder mehr Mikrohohlkugeln in die jeweiligen Kapseln kann die Dichte der Kapseln der Dichte der umgebenden Wasch- und Reinigungsmittelzusammensetzung angepasst werden und so ein unerwünschtes Absetzen oder Aufschwimmen (Aufrahmen) der Kapseln verhindert werden. Zweckmäßigerweise sind die Mikrohohlkugeln rund und glatt. Die Mikrohohlkugeln können aus anorganischem Material wie Wasserglas, Aluminiumsilikat, Borsilikatglas Sodakalkglas oder einer Keramik oder aus organischen Polymeren wie zum Beispiel Homo- oder Copolymere von Styrol, Acrylonitril und Vinylidenchlorid. Geeignete Mikrohohlkugeln sind im Handel beispielsweise unter den Namen Fillite® (ex Trelleborg Fillite), Expancel® (ex Akzo Nobel), Scotchlite® (ex 3M), Dualite® (es Sovereign Specialty Chemicals), Sphericel® (ex Potters Industries), Zeeospheres® (ex 3M), Q-Cel® (ex PQ Corporation) oder Extendospheres® (ex PQ Corporation) erhältlich. Weitere geeignete Mikrohohlkugeln werden unter der Produktbezeichnung E-Spheres von der Firma OMEGA MINERALS angeboten. E-Spheres sind weiße, keramische Mikrohohlkugeln, die in unterschiedlichen Korngrößen, Korngrößenverteilungen, Schüttgewichten und Schüttvolumen angeboten werden. Viele der genannten Mikrohohlkugeln sind chemisch inert und werden nach Zerstörung der Kapsel in der Waschflotte dispergiert und mit dieser dann entfernt.

Wie oben bereits erwähnt kann durch Einbau von Mikrohohlkugeln die Dichte der Kapseln variiert bzw. eingestellt werden. Die Menge an Mikrohohlkugeln in einer Kapsel hängt von der gewünschten Dichte der Kapsel ab. Es ist aber bevorzugt, dass die Menge an Mikrohohlkugeln in der wässrigen Alginat-Lösung vorzugsweise zwischen 0 und 10 Gew.-%, mehr bevorzugt zwischen 1 und 5 Gew.-% und insbesondere bevorzugt zwischen 2 und 4 Gew.-% beträgt.

Aus ästhetischen Gründen kann es wünschenswert sein, dass die Kapsel gefärbt sind. Dazu kann die Kapsel, ein oder mehr färbende Mittel wie ein Pigment oder einen Farbstoff enthalten. Es kann auch bevorzugt sein, dass die Kapsel ein Konservierungsmittel enthält.

Die Freisetzung des aktiven Inhaltsstoffs aus den Kapseln erfolgt üblicherweise während der Anwendung der sie enthaltenden Mittel durch Zerstörung der Matrix infolge mechanischer, thermischer, chemischer oder enzymatischer Einwirkung. In einer bevorzugten Ausführungsform der Erfindung enthalten die flüssigen Waschund Reinigungsmittel gleiche oder verschiedene Kapseln in Mengen von 0,01 bis 10 Gew.-%, insbesondere 0,2 bis 8 Gew.-% und äußerst bevorzugt 0,5 bis 5 Gew.-%.

Gegenstand der vorliegenden Erfindung sind des Weiteren auch Mittel, insbesondere Wasch- und Reinigungsmittel sowie Textilbehandlungsmittel, enthaltend erfindungsgemäße anti-adhäsiv wirksame Polymere und/oder vorgenannte erfindungsgemäße Kapseln, insbesondere polymere Matrixstrukturen.

Die anti-adhäsiv wirksamen Polymere sind in dem erfindungsgemäßen Mittel vorzugsweise in einer Menge von 0,01-5, besonders bevorzugt 0,05-1 Gew.-%. enthalten, so dass die fertige Waschlauge vorzugsweise eine um den Faktor 1:100 bis 1:200 niedrigere Menge an anti-adhäsiv wirksamen Polymer enthält.

Das Mittel kann auch unterschiedliche Kapseln unterschiedlicher Größe, unterschiedlicher Zusammensetzung und/oder unterschiedlichen Inhalts enthalten. Falls weitere Kapseln enthalten sind, so können diese vorzugsweise empfindliche, chemisch oder physikalisch inkompatible oder flüchtige Komponenten des Wasch-und/oder Reinigungsmittels enthalten, die hierdurch vorzugsweise lager- und transportstabil eingeschlossen werden können. Die Kapseln sind in dem erfindungsgemäßen Mittel vorzugsweise in einer Menge von 1-10 Gew.-% enthalten.

Neben den Kapseln enthalten die flüssigen Wasch- und Reinigungsmittel Tensid(e), wobei anionische, nichtionische, kationische und/oder amphotere Tenside eingesetzt werden können. Bevorzugt sind aus anwendungstechnischer Sicht Mischungen aus anionischen und nichtionischen Tensiden. Der Gesamttensidgehalt des flüssigen Wasch- und Reinigungsmittel liegt vorzugsweise unterhalb von 40 Gew.-% und besonders bevorzugt unterhalb von 35 Gew.-%, bezogen auf das gesamte flüssige Wasch- und Reinigungsmittel.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO, 4 EO oder 7 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/13533 beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (1), 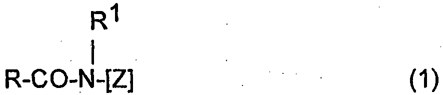 in der RCO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (2), 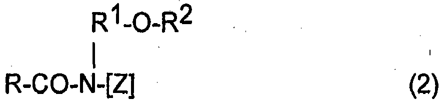 in der R für einen linearen oder verzweigten Alkyl- oder Alkenylrest mit 7 bis 12 Kohlenstoffatomen, R¹ für einen linearen, verzweigten oder cyclischen Alkylrest oder einen Arylrest mit 2 bis 8 Kohlenstoffatomen und R² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes.

[Z] wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise nach der Lehre der internationalen Anmeldung WO-A-95/07331 durch Umsetzung mit Fettsäuremethylestern in Gegenwart eines Alkoxids als Katalysator in die gewünschten Polyhydroxyfettsäureamide überführt werden.

Der Gehalt an nichtionischen Tensiden beträgt den flüssigen Wasch- und Reinigungsmitteln bevorzugt 5 bis 30 Gew.-%, vorzugsweise 7 bis 20 Gew.-% und insbesondere 9 bis 15 Gew.-%, jeweils bezogen auf das gesamte Mittel.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), zum Beispiel die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Der Gehalt bevorzugter flüssiger Wasch- und Reinigungsmittel an anionischen Tensiden beträgt 2 bis 30 Gew.-%, vorzugsweise 4 bis 25 Gew.-% und insbesondere 5 bis 22 Gew.-%, jeweils bezogen auf das gesamte Mittel.

Die Viskosität der flüssigen Wasch- und Reinigungsmittel kann mit üblichen Standardmethoden (beispielsweise Brookfield-Viskosimeter LVT-II bei 20 U/min und 20°C, Spindel 3) gemessen werden und liegt vorzugsweise im Bereich von 500 bis 5000 mPas. Bevorzugte Mittel haben Viskositäten von 700 bis 4000 mPas, wobei Werte zwischen 1000 und 3000 mPas besonders bevorzugt sind.

Die flüssigen Wasch- und Reinigungsmittel können weitere Inhaltsstoffe enthalten, die die anwendungstechnischen und/oder ästhetischen Eigenschaften des flüssigen Wasch- und Reinigungsmittels weiter verbessern. Im Rahmen der vorliegenden Erfindung enthalten bevorzugte Mittel einen oder mehrere Stoffe aus der Gruppe der Gerüststoffe, Bleichmittel, Bleichaktivatoren, Enzyme, Elektrolyte, nichtwässrigen Lösungsmittel, pH-Stellmittel, Duftstoffe, Parfümträger, Fluoreszenzmittel, Farbstoffe, Hydrotope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Korrosionsinhibitoren, Antistatika, Bügelhilfsmittel, Phobier- und Imprägniermittel, Quell- und Schiebefestmittel sowie UV-Absorber.

Als Gerüststoffe, die in den flüssigen Wasch- und Reinigungsmitteln enthalten sein können, sind insbesondere Silikate, Aluminiumsilikate (insbesondere Zeolithe), Carbonate, Salze organischer Di- und Polycarbonsäuren sowie Mischungen dieser Stoffe zu nennen.

Geeignete kristalline, schichtförmige Natriumsilikate besitzen die allgemeine Formel NaMSiₓO₂ₓ₊₁ H₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilikate werden beispielsweise in der europäischen Patentanmeldung EP-A-0 164 514 beschrieben. Bevorzugte kristalline Schichtsilikate der angegebenen Formel sind solche, in denen M für Natrium steht und x die Werte 2 oder 3 annimmt. Insbesondere sind sowohl ß- als auch δ-Natriumdisilikate Na₂Si₂O₅·yH₂O bevorzugt, wobei ß-Natriumdisilikat beispielsweise nach dem Verfahren erhalten werden kann, das in der internationalen Patentanmeldung WO-A-91/08171 beschrieben ist.

Einsetzbar sind auch amorphe Natriumsilikate mit einem Modul Na₂O : SiO₂ von 1 : 2 bis 1 : 3,3, vorzugsweise von 1 : 2 bis 1 : 2,8 und insbesondere von 1 : 2 bis 1 : 2,6, welche löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/ Verdichtung oder durch Übertrocknung hervorgerufen worden sein. Im Rahmen dieser Erfindung wird unter dem Begriff "amorph" auch "röntgenamorph" verstanden. Dies heißt, dass die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, dass die Produkte mikrokristalline Bereiche der Größe 10 bis einige Hundert nm aufweisen, wobei Werte bis maximal 50 nm und insbesondere bis maximal 20 nm bevorzugt sind. Derartige sogenannte röntgenamorphe Silikate, welche ebenfalls eine Löseverzögerung gegenüber den herkömmlichen Wassergläsern aufweisen, werden beispielsweise in der deutschen Patentanmeldung DE-A- 44 00 024 beschrieben. Insbesondere bevorzugt sind verdichtete/kompaktierte amorphe Silikate, compoundierte amorphe Silikate und übertrocknete röntgenamorphe Silikate.

Der eingesetzte feinkristalline, synthetische und gebundenes Wasser enthaltende Zeolith ist vorzugsweise Zeolith A und/oder P. Als Zeolith P wird Zeolith MAP® (Handelsprodukt der Firma Crosfield) besonders bevorzugt. Geeignet sind jedoch auch Zeolith X sowie Mischungen aus A, X und/oder P. Kommerziell erhältlich und im Rahmen der vorliegenden Erfindung bevorzugt eisetztbar ist beispielsweise auch ein Co-Kristallisat aus Zeolith X und Zeolith A (ca. 80 Gew.-% Zeolith X), das von der Firma SASOL unter dem Markennamen VEGOBOND AX^{®} vertrieben wird und durch die Formel

nNa₂O · (1-n)K₂O · Al₂O₃ · (2 - 2,5)SiO₂ · (3,5 - 5,5) H₂O n = 0,90 - 1,0

beschrieben werden kann. Der Zeolith kann als sprühgetrocknetes Pulver oder auch als ungetrocknete, von ihrer Herstellung noch feuchte, stabilisierte Suspension zum Einsatz kommen. Für den Fall, dass der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Selbstverständlich ist auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate.

Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure.

Um beim Waschen bei Temperaturen von 60 °C und darunter eine verbesserte Bleichwirkung zu erreichen, können Bleichaktivatoren in die Wasch- und Reinigungsmittel eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonänoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran.

Zusätzlich zu den konventionellen Bleichaktivatoren oder an deren Stelle können auch sogenannte Bleichkatalysatoren in die flüssigen Wasch- und Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder - carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Amminkomplexe sind als Bleichkatalysatoren verwendbar.

Das flüssige Wasch- und Reinigungsmittel enthält bevorzugt ein Verdickungsmittel. Das Verdickungsmittel kann beispielsweise einen Polyacrylat-Verdicker, Xanthan Gum, Gellan Gum, Guarkernmehl, Alginat, Carrageenan, Carboxymethylcellulose, Bentonite, Wellan Gum, Johannisbrotkernmehl, Agar-Agar, Tragant, Gummi arabicum, Pektine, Polyosen, Stärke, Dextrine, Gelatine und Casein umfassen. Aber auch abgewandelte Naturstoffe wie modifizierten Stärken und Cellulosen, beispielhaft seien hier Carboxymethylcellulose und andere Celluloseether, Hydroxyethyl- und -propylcellulose sowie Kernmehlether genannt, können als Verdickungsmittel eingesetzt werden.

Zu den Polyacryl- und Polymethacryl-Verdickern zählen beispielsweise die hochmolekularen mit einem Polyalkenylpolyether, insbesondere einem Allylether von Saccharose, Pentaerythrit oder Propylen, vernetzten Homopolymere der Acrylsäure (INCI- Bezeichnung gemäß "International Dictionary of Cosmetic Ingredients" der "The Cosmetic, Toiletry and Fragrance Association (CTFA)": Carbomer), die auch als Carboxyvinylpolymere bezeichnet werden. Solche Polyacrylsäuren sind u.a. von der Fa. 3V Sigma unter dem Handelsnamen Polygel®, z.B. Polygel DA, und von der Fa. B.F. Goodrich unter dem Handelsnamen Carbopol® erhältlich, z.B. Carbopol 940 (Molekulargewicht ca. 4.000.000), Carbopol 941 (Molekulargewicht ca. 1. 250.000) oder Carbopol 934 (Molekulargewicht ca. 3. 000.000). Weiterhin fallen darunter folgende AcrylsäureCopolymere: (i) Copolymere von zwei oder mehr Monomeren aus der Gruppe der Acrylsäure, Methacrylsäure und ihrer einfachen, vorzugsweise mit C₁₋₄-Alkanolen gebildeten, Ester (INCI Acrylates Copolymer), zu denen etwa die Copolymere von Methacrylsäure, Butylacrylat und Methylmethacrylat (CAS- Bezeichnung gemäß Chemical Abstracts Service: 25035-69-2) oder von Butylacrylat und Methylmethacrylat (CAS 25852-37-3) gehören und die beispielsweise von der Fa. Rohm & Haas unter den Handelsnamen Aculyn® und Acusol® sowie von der Firma Degussa (Goldschmidt) unter dem Handelsnamen Tego® Polymer erhältlich sind, z.B. die anionischen nicht-assoziativen Polymere Aculyn 22, Aculyn 28, Aculyn 33 (vernetzt), Acusol 810, Acusol 820, Acusol 823 und Acusol 830 (CAS 25852-37-3); (ii) vernetzte hochmolekulare Acrylsäurecopolymere, zu denen etwa die mit einem Allylether der Saccharose oder des Pentaerythrits vernetzten Copolymere von C₁₀₋₃₀-Alkylacrylaten mit einem oder mehreren Monomeren aus der Gruppe der Acrylsäure, Methacrylsäure und ihrer einfachen, vorzugsweise mit C₁₋₄-Alkanolen gebildeten, Ester (INCI Acrylates/C₁₀₋₃₀ Alkyl Acrylate Crosspolymer) gehören und die beispielsweise von der Fa. B.F. Goodrich unter dem Handelsnamen Carbopol® erhältlich sind, z.B. das hydrophobierte Carbopol ETD 2623 und Carbopol 1382 (INCI Acrylates/C₁₀₋₃₀ Alkyl Acrylate Crosspolymer) sowie Carbopol Aqua 30 (früher Carbopol EX 473).

Ein weiteres bevorzugt einzusetzendes polymeres Verdickungsmittel ist Xanthan Gum, ein mikrobielles anionisches Heteropolysaccharid, das von Xanthomonas campestris und einigen anderen Species unter aeroben Bedingungen produziert wird und eine Molmasse von 2 bis 15 Millionen Dalton aufweist. Xanthan wird aus einer Kette mit β-1,4-gebundener Glucose (Cellulose) mit Seitenketten gebildet. Die Struktur der Untergruppen besteht aus Glucose, Mannose, Glucuronsäure, Acetat und Pyruvat, wobei die Anzahl der Pyruvat-Einheiten die Viskosität des Xanthan Gums bestimmt. Xanthan Gum ist beispielsweise von der Fa. Kelco unter den Handelsnamen Keltrol® und Kelzan® oder auch von der Firma Rhodia unter dem Handelsnamen Rhodopol® erhältlich.

Bevorzugte wässrige flüssige Wasch- und Reinigungsmittel enthalten bezogen auf das gesamte Mittel 0,01 bis 1 Gew.-% und vorzugsweise 0,1 bis 0,5 Gew.-% Verdickungsmittel.

Das wässrige flüssige Wasch- und Reinigungsmittel kann Enzyme in verkapselter Form und/oder direkt in der Wasch- und Reinigungsmittelzusammensetzung enthalten. Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie Bacillus subtilis, Bacillus licheniformis, Streptomyceus griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse.

Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich verschiedene Cellulase-Typen durch ihre CMCase- und Avicelase-Aktivitäten unterscheiden, können durch gezielte Mischungen der Cellulasen die gewünschten Aktivitäten eingestellt werden.

Die Enzyme können an Trägerstoffe adsorbiert sein, um sie gegen vorzeitige Zersetzung zu schützen. Der Anteil der Enzyme, Enzymmischungen oder Enzymgranulate direkt in der wasch- und Reinigungsmittelzusammensetzung kann beispielsweise etwa 0,1 bis 5 Gew.-%, vorzugsweise 0,12 bis etwa 2,5 Gew.-% betragen.

Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Halogenide und Sulfate. Aus herstellungstechnischer Sicht ist der Einsatz von NaCl oder MgCl₂ in den Mitteln bevorzugt. Der Anteil an Elektrolyten in den Mitteln beträgt üblicherweise 0,5 bis 5 Gew.-%.

Nichtwässrige Lösungsmittel, die in den flüssigen Wasch- und Reinigungsmitteln eingesetzt werden können, stammen beispielsweise aus der Gruppe ein- oder mehrwertigen Alkohole, Alkanolamine oder Glykolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethyl-, -ethyl- oder -propylether, Dipropylenglykolmonomethyl- oder -ethylether, Diisopropylenglykolmonomethyl- oder -ethylether, Methoxy-, Ethoxy- oder Butoxytriglykol, 1-Butoxyethoxy-2-propanol, 3-Methyl-3-methoxybutanol, Propylenglykol-t-butylether sowie Mischungen dieser Lösungsmittel. Nichtwässrige Lösungsmittel können in den flüssigen Wasch- und Reinigungsmitteln in Mengen zwischen 0,5 und 15 Gew.-%, bevorzugt aber unter 12 Gew.-% und insbesondere unterhalb von 9 Gew.-% eingesetzt werden.

Um den pH-Wert der flüssigen Wasch- und Reinigungsmittel, in den gewünschten Bereich zu bringen, kann der Einsatz von pH-Stellmitteln angezeigt sein. Einsetzbar sind hier sämtliche bekannten Säuren bzw. Laugen, sofern sich ihr Einsatz, nicht aus anwendungstechnischen oder ökologischen Gründen bzw. aus Gründen des Verbraucherschutzes verbietet. Üblicherweise überschreitet die Menge dieser Stellmittel 7 Gew.-% der Gesamtformulierung nicht.

Um den ästhetischen Eindruck der flüssigen Wasch- und Reinigungsmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

Als Schauminhibitoren, die in den flüssigen Wasch- und Reinigungsmitteln eingesetzt werden können, kommen beispielsweise Seifen, Paraffine oder Silikonöle in Betracht, die gegebenenfalls auf Trägermaterialien aufgebracht sein können. Geeignete Antiredepositionsmittel, die auch als "soil repellents" bezeichnet werden, sind beispielsweise nichtionische Celluloseether wie Methylcellulose und Methylhydroxypropylcellulose mit einem Anteil an Methoxygruppen von 15 bis 30 Gew.-% und an Hydroxypropylgruppen von 1 bis 15 Gew.-%, jeweils bezogen auf den nichtionischen Celluloseether sowie die aus dem Stand der Technik bekannten Polymere der Phthalsäure und/oder Terephthalsäure bzw. von deren Derivaten, insbesondere Polymere aus Ethylenterephthalaten und/oder Polyethylenglycolterephthalaten oder anionisch und/oder nichtionisch modifizierten Derivaten von diesen. Insbesondere bevorzugt von diesen sind die sulfonierten Derivate der Phthalsäure- und Terephthalsäure-Polymere.

Optische Aufheller (sogenannte "Weißtöner") können den flüssigen Wasch- und Reinigungsmitteln zugesetzt werden, um Vergrauungen und Vergilbungen der behandelten Textilen Flächengebilden zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Dihydrochinolinone, 1,3-Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise Leim, Gelatine, Salze von Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, zum Beispiel abgebaute Stärke, Aldehydstärken usw. Auch Polyvinylpyrrolidon ist brauchbar. Bevorzugt werden jedoch Celluloseether wie Carboxymethylcellulose (Na-Salz), Methylcellulose, Hydroxyalkylcellulose und Mischether wie Methylhydroxyethylcellulose, Methylhydroxypropylcellulose, Methylcarboxymethylcellulose und deren Gemische in Mengen von 0,1 bis 5 Gew.-%, bezogen auf die Mittel, eingesetzt.

Da textile Flächengebilde, insbesondere aus Reyon, Zellwolle, Baumwolle und deren Mischungen, zum Knittern neigen können, weil die Einzelfasern gegen Durchbiegen, Knicken, Pressen und Quetschen quer zur Faserrichtung empfindlich sind, können die Mittel synthetische Knitterschutzmittel enthalten. Hierzu zählen beispielsweise synthetisphe Produkte auf der Basis von Fettsäuren, Fettsäureestern, Fettsäureamiden, -alkylolestern, -alkylolamiden oder' Fettalkoholen, die meist mit Ethylenoxid umgesetzt sind, oder Produkte auf der Basis von Lecithin oder modifizierter Phosphorsäureester.

Zur Bekämpfung von Mikroorganismen können die flüssigen Wasch- und Reinigungsmittel antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarylsulfonate, Halogenphenole und Phenolmercuriacetat, wobei bei den erfindungemäßen Mitteln auch gänzlich auf diese Verbindungen verzichtet werden kann.

Um unerwünschte, durch Sauerstoffeinwirkung und andere oxidative Prozesse verursachte Veränderungen an den flüssigen Wasch- und Reinigungsmitteln und/oder den behandelten textilen Flächengebilden zu verhindern, können die Mittel Antioxidantien enthalten. Zu dieser Verbindungsklasse gehören beispielsweise substituierte Phenole, Hydrochinone, Brenzcatechine und aromatische Amine sowie organische Sulfide, Polysulfide, Dithiocarbamate, Phosphite und Phosphonate.

Ein erhöhter Tragekomfort kann aus der zusätzlichen Verwendung von Antistatika resultieren, die den Mitteln zusätzlich beigefügt werden. Antistatika vergrößern die Oberflächenleitfähigkeit und ermöglichen damit ein verbessertes Abfließen gebildeter Ladungen. Äußere Antistatika sind in der Regel Substanzen mit wenigstens einem hydrophilen Molekülliganden und geben auf den Oberflächen einen mehr oder minder hygroskopischen Film. Diese zumeist grenzflächenaktiven Antistatika lassen sich in stickstoffhaltige (Amine, Amide, quartäre Ammoniumverbindungen), phosphorhaltige (Phosphorsäureester) und schwefelhaltige (Alkylsulfonate, Alkylsulfate) Antistatika unterteilen. Externe Antistatika sind beispielsweise in den Patentanmeldungen FR 1,156,513, GB 873 214 und GB 839 407 beschrieben. Die hier offenbarten Lauryl- (bzw. Stearyl-) dimethylbenzylammoniumchloride eignen sich als Antistatika für textile Flächengebilde bzw. als Zusatz zu Waschmitteln, wobei zusätzlich ein Avivageeffekt erzielt wird.

Zur Verbesserung des Wasserabsorptionsvermögens, der Wiederbenetzbarkeit der behandelten textilen Flächengebilde und zur Erleichterung des Bügelns der behandelten textilen Flächengebilde können in den flüssigen Wasch- und Reinigungsmitteln beispielsweise Silikonderivate eingesetzt werden. Diese verbessern zusätzlich das Ausspülverhalten der Mittel durch ihre schauminhibierenden Eigenschaften. Bevorzugte Silikonderivate sind beispielsweise Polydialkyl- oder Alkylarylsiloxane, bei denen die Alkylgruppen ein bis fünf C-Atome aufweisen und ganz oder teilweise fluoriert sind. Bevorzugte Silikone sind Polydimethylsiloxane, die gegebenenfalls derivatisiert sein können und dann aminofunktionell oder quaterniert sind bzw. Si-OH-, Si-H- und/oder Si-Cl-Bindungen aufweisen. Die Viskositäten der bevorzugten Silikone liegen bei 25°C im Bereich zwischen 100 und 100.000 mPas, wobei die Silikone in Mengen zwischen 0,2 und 5 Gew.-%, bezogen auf das gesamte Mittel eingesetzt werden können.

Schließlich können die flüssigen Wasch- und Reinigungsmittel auch UV-Absorber enthalten, die auf die behandelten textilen Flächengebilde aufziehen und die Lichtbeständigkeit der Fasern verbessern. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, in 3-Stellung Phenyl-substituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet.

Um die durch Schwermetalle katalysierte Zersetzung bestimmter Waschmittel-Inhaltsstoffe zu vermeiden, können Stoffe eingesetzt werden, die Schwermetalle komplexieren. Geeignete Schwermetallkomplexbildner sind beispielsweise die Alkalisalze der Ethylendiamintetraessigsäure (EDTA) oder der Nitrilotriessigsäure (NTA) sowie Alkalimetallsalze von anionischen Polyelektrolyten wie Polymaleaten und Polysulfonaten.

Eine bevorzugte Klasse von Komplexbildnern sind die Phosphonate, die in bevorzugten flüssigen Wasch- und Reinigungsmitteln in Mengen von 0,01 bis 2,5 Gew.-%, vorzugsweise 0,02 bis 2 Gew.-% und insbesondere von 0,03 bis 1,5 Gew.-% enthalten sind. Zu diesen bevorzugten Verbindungen zählen insbesondere Organophosphonate wie beispielsweise 1-Hydroxyethan-1,1-diphosphonsäure (HEDP), Aminotri(methylenphosphonsäure) (ATMP), Diethylentriamin-penta(methylenphosphonsäure) (DTPMP bzw. DETPMP) sowie 2-Phosphonobutan-1,2,4-tricarbonsäure (PBS-AM), die zumeist in Form ihrer Ammonium- oder Alkalimetallsalze eingesetzt werden.

Die erhaltenen wässrigen flüssigen Wasch- und Reinigungsmittel sind vorzugsweise klar, dass heißt sie weisen keinen Bodensatz auf und sind insbesondere bevorzugt transparent oder zumindest transluzent.

Die erfindungsgemäßen Wasch- und Reinigungsmittel können zum Reinigen von textilen Flächengeweben verwendet werden.

Zur Herstellung der flüssigen Wasch- und Reinigungsmittel mit Gellan Gum als Verdicker wird zunächst Gellan Gum in Wasser gegeben und bei 80 °C quellen gelassen. Anschließend wird eine geringe Menge einer Salzlösung, vorzugsweise mit drei- oder zweiwertigen Metallkationen wie Al³⁺ oder Ca²⁺, zugegeben. Im nächsten Schritt werden die sauren Komponenten wie beispielsweise die linearen Alkylsulfonate, Zitronensäure, Borsäure, Phosphonsäure, die Fettalkoholethersulfate, usw. und die nichtionischen Tenside zugegeben. Anschließend wird eine Base wie beispielsweise NaOH, KOH, Triethanolamin oder Monoethanolamin gefolgt von der Fettsäure, falls vorhanden, zugegeben. Darauffolgend werden die restlichen Inhaltsstoffe und die Lösungsmittel des wässrigen flüssigen Wasch- und Reinigungsmittel sowie, falls vorhanden, der Polyacrylat-Verdicker zu der Mischung gegeben und der pH-Wert auf ungefähr 8,5 eingestellt. Abschließend können die zu dispergierenden Partikel zugegeben und durch Einrühren und/oder Mischen homogen in dem wässrigen flüssigen Wasch- und Reinigungsmittel verteilt werden.

Die Herstellung der flüssigen Wasch- und Reinigungsmittel ohne Gellan Gum erfolgt mittels üblicher und bekannter Methoden und Verfahren in dem beispielsweise die Bestandteile einfach in Rührkesseln vermischt werden, wobei Wasser, nichtwässrige Lösungsmittel und Tensid(e) zweckmäßigerweise vorgelegt werden und die weiteren Bestandteile portionsweise hinzugefügt werden. Ein gesondertes Erwärmen bei der Herstellung ist nicht erforderlich, wenn es gewünscht ist, sollte die Temperatur der Mischung 80°C nicht übersteigen.

Die Kapseln können stabil in den wässrigen flüssigen Wasch- und Reinigungsmittel, beispielsweise dispergiert werden. Stabil bedeutet, dass die Mittel bei Raumtemperatur und bei 40 °C über einen Zeitraum von mindestens 4 Wochen und bevorzugt von mindestens 6 Wochen stabil sind, ohne dass die Mittel aufrahmen oder sedimentieren.

### Ausführungsbeispiele

### Beispiel 1: Verhinderung der bakteriellen Adhäsion in simulierten Wäscheversuchen

Auf Textilproben definierter Größe werden wässrige Testkeimsuspensionen mit festgelegter Keimdichte aufgebracht und getrocknet. Anschließend werden die textilen Keimträger in einem labor-simulierten Waschprogramm gewaschen, wobei die zu prüfenden Substanzen den Waschflotten zugesetzt werden. Danach wird der Gehalt überlebender, vermehrungsfähiger Mikroorganismen auf den Textil-Keimträgern bestimmt. Die Beurteilung der Ergebnisse erfolgt durch den Vergleich zu einer als Kontrolle mitgeführten, unbehandelten, aber kontaminierten Textilprobe, die in Waschflotte ohne Substanzzusätze gewaschen wurde. Gegebenenfalls können die Keimträger vor der Kontamination mehrmals mit der Waschlauge vorbehandelt werden.

Die Teststämme Staphylococcus hominis (DSM 20328) und Corynebacterium amycolatum (DSM 6922) werden bei 37°C auf CaSo-Agar unter aeroben Bedingungen für 18-24 kultiviert. Die bewachsenen Platten werden mit Wasser abgeschwemmt, die Suspensionen durch Glaswolle filtriert und auf 10⁴ KBE/ml eingestellt. Die Waschflotten werden in geeigneten Erlenmeyerkolben angesetzt und enthalten in der Summe in 10 ml die anforderungsgemäße Waschmittelkonzentration sowie eventuelle Wirkstoffzusätze. Die so hergestellten Ansätze werden für ca. 30 min auf 30°C vortemperiert.

Die vorbereiteten Textilstücke werden für 15 min in ein ausreichendes Volumen der vorbereiteten Testkeimsuspension gelegt und anschließend bei 37°C für 120 min getrocknet. Nach Trocknung soll ein Keimgehalt von 10³ KBE/ml erreicht werden, der durch eine Keimzahlbestimmung verifiziert wird.

Es folgt die Simulation des eigentlichen Waschprogramms:
- Zugabe von je 2 kontaminierten Keimträgern pro Waschflotten-Ansatz zum Zeitpunkt 0
- 60 min Schütteln (200 Upm, 30°C)
- 4x10 min Spülen mit je 10 ml Wasser (200 Upm)

Jeder Keimträger wird in einem 10 ml Ansatz mit 2 ml Glasperlen für eine Minute bei 2500 Upm auf dem Vortex-Mixer geschüttelt. Anschließend werden die ausgeschüttelten Bakterien in einer Verdünnungsreihe auf CaSo-Agar auscgestrichen, bei 37°C für 2-4 Tage aerob bebrütet und die Keimzahl bestimmt.

Bei dem simulierten Waschversuch konnten eine gute anti-adhäsive Wirkung nachgewiesen werden für PEG 600, PEG 12000, einem Pfropfcopolymer aus PEG 6000 und Vinylacetat. Hierbei zeigte das Pfropfcopolymer eine bessere Wirkung als die freien Polyethylenglykole. Einige der Ergebnisse sind im Folgenden tabellarisch dargestellt.

**Tabelle 1: Adhäsionsinhibition durch PEG/Vinylacetat auf Polyester-Keimträgern**

| | KBE/cm² S. hominis | KBE/cm² C. amycolatum |
|---|---|---|
| Flüssigwaschmittel A | 3,40 | 7,36 |
| Flüssigwaschmittel A + 10 ppm PEG 6000/Vinylacetat (65/35) | 1,92 | 0 |

**Tabelle 2: Adhäsionsinhibition durch PEG-Vinylacetat auf Polyester-Keimträgern in einer Speckles-Formulierung auf Polyester-Keimträgern**

| | KBE/cm² S. hominis | KBE/cm² C. amycolatum |
|---|---|---|
| Flüssigwaschmittel B | 2,06 | 0,58 |
| Flüssigwaschmittel B + 2 ppm PEG 6000/Vinylacetat (65/35) | 1,06 | 0,04 |

**Tabelle 3: Adhäsionsinhibition durch PEG/Vinylacetat in verschiedenen Verhältnissen auf Polyester-Keimträgern**

| | KBE/cm² C. amycolatum |
|---|---|
| Flüssigwaschmittel A | 71,05 |
| Flüssigwaschmittel A + 10 ppm PEG 6000/Vinylacetat (90/10) | 6,82 |
| Flüssigwaschmittel A + 10 ppm PEG 6000/Vinylacetat (80/20) | 5,68 |
| Flüssigwaschmittel A + 10 ppm PEG 6000/Vinylacetat (70/30) | 20,23 |
| Flüssigwaschmittel A + 10 ppm PEG 6000/Vinylacetat (60/40) | 27,82 |
| Flüssigwachmittel A + 10 ppm PEG 6000/Vinylacetat (50/50) | 97,73 |

### Beispiel 3: Herstellung von Alginat-Kapseln

Es wurden verschiedene Kapseln K1 bis K6 mit Alginat als Matrix-Material in einem Härtebad mittels einer Rieter-Vertropfungsanlage hergestellt bzw. vetropft.

Die jeweiligen Alginat-Lösungen wiesen die in Tabelle 4 angegebenen Zusammensetzungen (Angaben in Gew.-%) auf.

**Tabelle 4 :**

| | K1 | K2 | K3 | K4 | K5 | K6 |
|---|---|---|---|---|---|---|
| Na-Alginat | 1 | 1 | 1 | 1 | 1 | 1 |
| Aerosil 200 | 3 | 3 | 3 | -- | -- | -- |
| Sipernat 22S | -- | -- | -- | 3 | 3 | 3 |
| Mikrohohlkugeln¹ | 2 | 2 | 2 | 2 | 2 | 2 |
| Konservierungsmittel | 0,05 | 0,05 | 0,05 | 0,05 | 0,05 | 0,05 |
| Farbstoff Anti-adhäsives | 0,1 | 0,1 | 0,1 | 0,1 | 0,1 | 0,1 |
| Polymer | 5 | 15 | 25 | 5 | 15 | 25 |
| Wasser | Ad 100 | Ad 100 | Ad 100 | Ad 100 | Ad 100 | Ad 100 |

| | | | | | | |
|---|---|---|---|---|---|---|
| ¹ keramische Mikrohohlkugeln mit einem Durchmesser im Bereich von 10 bis 125 µm und einer Dichte im Bereich von 0,5 bis 0,7 g·cm⁻³. | | | | | | |

Das verwendete Härtebad enthielt
2,5 Gew.-% CaCl₂
0,2 Gew.-% Polydiallyldimethylammoniumchlorid
0,05 Gew.-% Konservierungsmittel
und auf 100 Gew.-% Wasser.

Die erhaltenen Kapseln K1 bis K 6 wurden mehrmals mit Wasser und einem Komplexbildner, wie beispielsweise Dequest® gewaschen.

Die erfindungsgemäßen Kapseln können stabil in wässrigen flüssigen Wasch- und Reinigungsmittel unterschiedlichster Zusammensetzung dispergiert werden. Stabil bedeutet, dass die Mittel bei Raumtemperatur und bei 40 °C über einen Zeitraum von mindestens 4 Wochen und bevorzugt von mindestens 6 Wochen stabil sind, ohne dass die Mittel aufrahmen oder sedimentieren.

In Tabelle 5 sind erfindungsgemäße Wasch- und Reinigungsmittel E1 bis E4 gezeigt. Die erhaltenen Wasch- und Reinigungsmittel E1 bis E4 wiesen eine Viskosität um 1.000 mPas auf. Der pH-Wert der flüssigen Wasch- und Reinigungsmittel lag bei 8,5.

**Tabelle 5 :**

| | E1 | E2 | E3 | E4 |
|---|---|---|---|---|
| Gellan Gum | 0,2 | 0,2 | 0,15 | -- |
| Xanthan Gum | -- | -- | 0,15 | -- |
| Polyacrylat (Carbopol Aqua 30) | 0,4 | 0,4 | -- | 0,6 |
| C₁₂₋₁₄-Fettalkohol mit 7 EO | 22 | 10 | 10 | 10 |
| C₉₋₁₃ Alkylbenzolsulfonat, Na-Salz | -- | 10 | 10 | 10 |
| C₁₂₋₁₄-Alkylpolyglycosid | 1 | -- | -- | -- |
| Zitronensäure | 1,6 | 3 | 3 | 3 |
| Phosphonsäure | 0,5 | 1 | 1 | 1 |
| Natriumlaurylethersulfat mit 2 EO | 10 | 5 | 5 | -- |
| Monoethanolamin | 3 | 3 | 3 | -- |
| C₁₂₋₁₈-Fettsäure | 7,5 | 7,5 | 7,5 | 5 |
| Propylenglykol | -- | 6,5 | 6,5 | -- |
| Na-Cumolsulfonat | -- | 2 | 2 | -- |
| Borsäure | -- | -- | -- | 1 |
| Enzyme, Farbstoffe, Stabilisatoren | + | + | + | + |
| Kapseln K1 mit ca. 2000 µm Ø | 0,5 | 0,5 | 0,5 | 0,5 |
| Wasser | Ad 100 | Ad 100 | Ad 100 | Ad 100 |

## Patentansprüche

1. Verwendung von gegenüber Mikroorganismen anti-adhäsiv wirksamen Polymeren zur Verhinderung oder Verminderung der Adhäsion von Mikroorganismen an Textilien, wobei die anti-adhäsiv wirksamen Polymere ausgewählt sind aus der Gruppe der Pfropfcopolymere, wobei die anti-adhäsiv wirksamen Polymere ein Strukturelement ausgewählt aus der Gruppe der wasserlöslichen Polyethylenglykole mit einem Molekulargewicht von 5000 - 7000 g/mol enthalten und wobei das Strukturelement die Pfropfgrundlage des Pfropfcopolymers darstellt und die Pfropfäste aus Polyvinylacetat bestehen, wobei der Anteil der Pfropfgrundlage 55-95 Gew.-% und der Anteil der Pfropfäste entsprechend 5-45 Gew.-% beträgt

2. Verwendung nach Anspruch 1, **dadurch gekennzeichnet, dass** es sich bei den Mikroorganismen um Bakterien handelt.

3. Verwendung nach Anspruch 2, **dadurch gekennzeichnet, dass** es sich bei den Bakterien um geruchsbildende Bakterien handelt.

4. Verwendung nach Anspruch 3, **dadurch gekennzeichnet, dass** die Bakterien ausgewählt sind aus geruchsbildenden Staphylokokken, gram-positiven anaerobe Kokken, aus geruchsbildenden Corynebakterien, aus geruchsbildenden Mikrokokken und/oder aus geruchsbildenden Bakterien der Gattungen Pseudomonas, Xanthomonas, Stenotrophomonas, und/oder Bacillus.

5. Verwendung von gegenüber Mikroorganismen anti-adhäsiv wirksamen Polymeren zur Verminderung oder Verhinderung von Wäschegeruch, wobei die anti-adhäsiv wirksamen Polymere ausgewählt sind aus der Gruppe der Pfropfcopolymere, wobei die anti-adhäsiv wirksamen Polymere ein Strukturelement ausgewählt aus der Gruppe der wasserlöslichen Polyethylenglykole mit einem Molekulargewicht von 5000 - 7000 g/mol enthalten und wobei das Strukturelement die Pfropfgrundlage des Pfropfcopolymers darstellt und die Pfropfäste aus Polyvinylacetat bestehen, wobei der Anteil der Pfropfgrundlage 55-95 Gew.-% und der Anteil der Pfropfäste entsprechend 5-45 Gew.-% beträgt.

6. Verwendung nach einem der vorhergehenden Ansprüche, **dadurch gekennzeichnet, dass** die gegenüber Mikroorganismen anti-adhäsiv wirksamen Polymere in eine Kapsel eingebettet sind.

7. Verwendung nach Anspruch 6, **dadurch gekennzeichnet, dass** es sich bei der Kapsel um eine polymere Matrixstruktur handelt.

8. Verwendung nach Anspruch 7, **dadurch gekennzeichnet, dass** die polymere Matrixstruktur ausgewählt ist aus einer Matrixstruktur aus Alginat, Carrageenan, Gellan Gum und Mischungen davon, die erhältlich sind durch Ausfällen der Polymere in Gegenwart von Kationen.

9. Verwendung nach einem der vorhergehenden Ansprüche, **dadurch gekennzeichnet, dass** die Verwendung in einem Wasch- oder Reinigungsmittel oder in einem Textilbehandlungsmittel erfolgt.

10. Kapsel, **dadurch gekennzeichnet, dass** sie gegenüber Mikroorganismen anti-adhäsiv wirksame Polymere enthält, wobei die anti-adhäsiv wirksamen Polymere ausgewählt sind aus der Gruppe der Pfropfcopolymere, wobei die anti-adhäsiv wirksamen Polymere ein Strukturelement ausgewählt aus der Gruppe der wasserlöslichen Polyethylenglykole mit einem Molekulargewicht von 5000 - 7000 g/mol enthalten und wobei das Strukturelement die Pfropfgrundlage des Pfropfcopolymers darstellt und die Pfropfäste aus Polyvinylacetat bestehen, wobei der Anteil der Pfropfgrundlage 55-95 Gew.-% und der Anteil der Pfropfäste entsprechend 5-45 Gew.-% beträgt.

11. Kapsel nach Anspruch 10, **dadurch gekennzeichnet, dass** es sich bei der Kapsel um eine polymere Matrixstruktur handelt.

12. Mittel ausgewählt aus Wasch- und Reinigungsmitteln und Textilbehandlungsmitteln, **dadurch gekennzeichnet, dass** es ein anti-adhäsives Polymer, das aus der Gruppe der Pfropfcopolymere ausgewählt ist und ein Strukturelement ausgewählt aus der Gruppe der wasserlöslichen Polyethylenglykole mit einem Molekulargewicht von 5000 - 7000 g/mol enthalten und wobei das Strukturelement die Pfropfgrundlage des Pfropfcopolymers darstellt und die Pfropfäste aus Polyvinylacetat bestehen, wobei der Anteil der Pfropfgrundlage 55-95 Gew.-% und der Anteil der Pfropfäste entsprechend 5-45 Gew.-% beträgt, und/oder eine Kapsel nach einem der Ansprüche 10 oder 11 enthält.

13. Textilien, **dadurch gekennzeichnet, dass** sie mit gegenüber Mikroorganismen anti- adhäsiven Polymeren, die aus der Gruppe der Pfropfcopolymere ausgewählt sind und ein Strukturelement ausgewählt aus der Gruppe der wasserlöslichen Polyethylenglykole mit einem Molekulargewicht von 5000 - 7000 g/mol enthalten und wobei das Strukturelement die Pfropfgrundlage des Pfropfcopolymers darstellt und die Pfropfäste aus Polyvinylacetat bestehen, wobei der Anteil der Pfropfgrundlage 55-95 Gew.-% und der Anteil der Pfropfäste entsprechend 5-45 Gew.-% beträgt, und/oder mit Kapseln nach einem der Ansprüche 10 oder 11 und/oder mit einem Mittel gemäß Anspruch 12 behandelt wurden.

## Claims

1. Use of polymers having antiadhesive action against microorganisms, for preventing or reducing the adhesion of microorganisms to textiles, wherein the polymers having antiadhesive action are selected from the group of graft copolymers, wherein the polymers having antiadhesive action contain a structural element which is selected from the group of water-soluble polyethylene glycols having a molecular weight of 5000 to 7000 g/mol, and wherein the structural element represents the graft base of the graft copolymer, and the graft branches are composed of polyvinyl acetate, wherein the proportion of the graft base is 55-95% by weight and the proportion of the graft branches is correspondingly 5-45% by weight.

2. Use according to Claim 1, **characterized in that** the microorganisms are bacteria.

3. Use according to Claim 2, **characterized in that** the bacteria are odor-forming bacteria.

4. Use according to Claim 3, **characterized in that** the bacteria are selected from odor-forming staphylococci, from gram-positive anaerobic cocci, from odor-forming corynebacteria, from odor-forming micrococci, and/or from odor-forming bacteria of the genera *Pseudomonas, Xanthomonas, Stenotrophomonas,* and/or *Bacillus.*

5. Use of polymers having antiadhesive action against microorganisms, for preventing or reducing laundry odor, wherein the polymers having antiadhesive action are selected from the group of graft copolymers, wherein the polymers having antiadhesive action contain a structural element which is selected from the group of water-soluble polyethylene glycols having a molecular weight of 5000 to 7000 g/mol, and wherein the structural element represents the graft base of the graft copolymer, and the graft branches are composed of polyvinyl acetate, wherein the proportion of the graft base is 55-95% by weight and the proportion of the graft branches is correspondingly 5-45% by weight.

6. Use according to one of the preceding claims, **characterized in that** the polymers having antiadhesive action against microorganisms are embedded in a capsule.

7. Use according to Claim 6, **characterized in that** the capsule is a polymeric matrix structure.

8. Use according to Claim 7, **characterized in that** the polymeric matrix structure is selected from a matrix structure composed of alginate, carrageenan, gellan gum, and mixtures thereof which are obtainable by precipitating the polymers in the presence of cations.

9. Use according to one of the preceding claims, **characterized in that** the use takes place in a detergent or cleaning agent or in a textile treatment agent.

10. Capsule, **characterized in that** the capsule contains polymers having antiadhesive action against microorganisms, wherein the polymers having antiadhesive action are selected from the group of graft copolymers, wherein the polymers having antiadhesive action contain a structural element which is selected from the group of water-soluble polyethylene glycols having a molecular weight of 5000 to 7000 g/mol, and wherein the structural element represents the graft base of the graft copolymer, and the graft branches are composed of polyvinyl acetate, wherein the proportion of the graft base is 55-95% by weight and the proportion of the graft branches is correspondingly 5-45% by weight.

11. Capsule according to Claim 10, **characterized in that** the capsule is a polymeric matrix structure.

12. Agent selected from detergent and cleaning agents and textile treatment agents, **characterized in that** the agent contains a polymer having antiadhesive action which is selected from the group of graft copolymers, and a structural element which is selected from the group of water-soluble polyethylene glycols having a molecular weight of 5000 to 7000 g/mol, and wherein the structural element represents the graft base of the graft copolymer, and the graft branches are composed of polyvinyl acetate, wherein the proportion of the graft base is 55-95% by weight and the proportion of the graft branches is correspondingly 5-45% by weight, and/or contains a capsule according to one of Claims 10 or 11.

13. Textiles, **characterized in that** the textiles contain polymers having antiadhesive action against microorganisms which polymers are selected from the group of graft copolymers, and a structural element which is selected from the group of water-soluble polyethylene glycols having a molecular weight of 5000 to 7000 g/mol, and wherein the structural element represents the graft base of the graft copolymer, and the graft branches are composed of polyvinyl acetate, wherein the proportion of the graft base is 55-95% by weight and the proportion of the graft branches is correspondingly 5-45% by weight, and/or which have been treated with capsules according to one of Claims 10 or 11 and/or with an agent according to Claim 12.

## Revendications

1. Utilisation de polymères présentant une activité antiadhésive vis-à-vis des micro-organismes pour empêcher ou réduire l'adhérence des micro-organismes à des tissus, les polymères présentant une activité antiadhésive étant choisis dans le groupe des copolymères greffés, les polymères présentant une activité antiadhésive contenant un élément structurel choisi dans le groupe des polyéthylène-glycols hydrosolubles de poids moléculaire allant de 5000 à 7000 g/mol et l'élément structurel représentant la base de greffage du copolymère greffé et les greffons étant constitués d'acétate de polyvinyle, le pourcentage de la base de greffage étant de 55 à 95% en poids et le pourcentage des greffons étant de façon correspondante de 5 à 45% en poids.

2. Utilisation selon la revendication 1, **caractérisée en ce que** les micro-organismes sont des bactéries.

3. Utilisation selon la revendication 2, **caractérisée en ce que** les bactéries sont des bactéries produisant des odeurs.

4. Utilisation selon la revendication 3, **caractérisée en ce que** les bactéries sont choisies parmi les staphylocoques produisant des odeurs, les cocci anaérobies Gram-positives, les corynébactéries produisant des odeurs, les microcoques produisant des odeurs et/ou les bactéries produisant des odeurs des genres Pseudomonas, Xanthomonas, Stenotrophomonas, et/ou Bacillus.

5. Utilisation de polymères présentant une activité antiadhésive vis-à-vis des micro-organismes pour réduire ou empêcher l'odeur de lessive, les polymères présentant une activité antiadhésive étant choisis dans le groupe des copolymères greffés, les polymères présentant une activité antiadhésive contenant un élément structurel choisi dans le groupe des polyéthylène-glycols hydrosolubles de poids moléculaire allant de 5000 à 7000 g/mol et l'élément structurel représentant la base de greffage du copolymère greffé et les greffons étant constitués d'acétate de polyvinyle, le pourcentage de la base de greffage étant de 55 à 95% en poids et le pourcentage des greffons étant de façon correspondante de 5 à 45%.

6. Utilisation selon l'une des revendications précédentes, **caractérisée en ce que** les polymères présentant une activité antiadhésive vis-à-vis des micro-organismes sont incorporés dans une capsule.

7. Utilisation selon la revendication 6, **caractérisée en ce que** la capsule est une structure matricielle polymère.

8. Utilisation selon la revendication 7, **caractérisée en ce que** la structure matricielle polymère est choisie parmi l'alginate, le carraghénane, la gomme gellane, et leurs mélanges, qui peuvent être obtenus par précipitation des polymères en présence de cations.

9. Utilisation selon l'une des revendications précédentes, **caractérisée en ce que** l'utilisation se fait dans un agent de lavage ou de nettoyage ou un agent de traitement de textiles.

10. Capsule, **caractérisée en ce qu'**elle contient des polymères présentant une activité antiadhésive vis-à-vis des micro-organismes, les polymères présentant une activité antiadhésive étant choisis dans le groupe des copolymères greffés, les polymères présentant une activité antiadhésive contenant un élément structurel choisi dans le groupe des polyéthylène-glycols hydrosolubles de poids moléculaire allant 5000 à 7000 g/mol et l'élément structurel représentant la base de greffage du copolymère greffé et les greffons étant constitués d'acétate de polyvinyle, le pourcentage de la base de greffage étant de 55 à 95% en poids et le pourcentage des greffons étant de façon correspondante de 5 à 45% en poids.

11. Capsule selon la revendication 10, **caractérisée en ce que** la capsule est une structure matricielle polymère.

12. Agent choisi parmi les agents de lavage et de nettoyage et les agents de traitement de textiles, **caractérisé en ce qu'**il contient un polymère antiadhésif, qui est choisi dans le groupe des copolymères greffés, et un élément structurel choisi dans le groupe des polyéthylène-glycols hydrosolubles de poids moléculaire allant de 5000 à 7000 g/mol, l'élément structurel représentant la base de greffage du copolymère greffé et les greffons étant constitués d'acétate de polyvinyle, le pourcentage de la base de greffage étant de 55 à 95% en poids et le pourcentage des greffons étant de façon correspondante de 5 à 45% en poids, et/ou une capsule selon l'une quelconque des revendications 10 ou 11.

13. Textiles, **caractérisés en ce qu'**ils ont été traités au moyen de polymères qui présentent une activité antiadhésive vis-à-vis des micro-organismes, qui sont choisis dans le groupe des copolymères greffés et qui contiennent un élément structurel choisi dans le groupe des polyéthylène-glycols hydrosolubles de poids moléculaire allant de 5000 à 7000 g/mol, l'élément structurel représentant la base de greffage du copolymère greffé et les greffons étant constitués d'acétate de polyvinyle, le pourcentage de la base de greffage étant de 55 à 95% en poids et le pourcentage des greffons étant de façon correspondante de 5 à 45 en poids, et/ou au moyen de capsules selon l'une des revendications 10 ou 11 et/ou au moyen d'un agent selon la revendication 12.
